(19) Europäisches Patentamt / European Patent Office / Office européen des brevets

(11) **EP 2 583 994 A1**

(12) **EUROPEAN PATENT APPLICATION**
published in accordance with Art. 153(4) EPC

(43) Date of publication:
24.04.2013 Bulletin 2013/17

(51) Int Cl.:
*C08J 5/18* (2006.01)          *C08L 67/04* (2006.01)
*C08L 101/16* (2006.01)

(21) Application number: 11797933.6

(22) Date of filing: 17.05.2011

(86) International application number:
PCT/JP2011/061286

(87) International publication number:
WO 2011/162046 (29.12.2011 Gazette 2011/52)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 21.06.2010 JP 2010140116
24.02.2011 JP 2011038040

(71) Applicant: Toray Industries, Inc.
Tokyo 103-8666 (JP)

(72) Inventors:
• YAMAMURA, Gouhei
Otsu-shi
Shiga 520-8558 (JP)

• SAKAMOTO, Jun
Otsu-shi
Shiga 520-8558 (JP)
• YAKUSHIDOH, Kenichi
Otsu-shi
Shiga 520-8558 (JP)
• ENDO, Yoshikazu
Otsu-shi
Shiga 520-8558 (JP)

(74) Representative: Prüfer & Partner GbR
European Patent Attorneys
Sohnckestrasse 12
81479 München (DE)

(54) **POLYLACTIC ACID FILM**

(57) Provided is a polylactic acid-based film composed of a composition comprising a resin (A), a resin (B) and a plasticizer (C), wherein the resin (A) is a polylactic acid-based resin and the resin (B) is an aliphatic polyester-based resin that are not polylactic acid-based resins and/or an aliphatic-aromatic polyester-based resin, which polylactic acid-based film exhibits at least one crystallization peak in the temperature range of 105°C to 160°C when cooled from a molten state at a rate of 20°C/min by a differential scanning calorimeter and satisfies the following condition when the total calorific value of the crystallization peak(s) in the temperature range of 105°C to 160°C is defined as $\Delta Hmc_A$:

$$0.5 \leq \Delta Hmc_A \leq 9.5$$

EP 2 583 994 A1

## Description

### TECHNICAL FIELD

The present invention relates to a polylactic acid-based film which has excellent flexibility, tear resistance and impact resistance as well as excellent anti-blocking property and anti-bleeding property and exhibits good effects particularly when prepared by an inflation method.

### BACKGROUND ART

In recent years, with growing environmental awareness, the soil pollution problems caused by disposal of plastic products and the global warming problem caused by increased amount of carbon dioxide generated by incineration have been drawing attention. As a measure against the former problems, a variety of biodegradable resins, and as a measure against the latter problems, resins made from biomass (plant-derived materials) that do not release new carbon dioxide load into the atmosphere even when incinerated, have been actively studied and developed. Thereamong, attention has been drawn to polylactic acids which satisfy both of these characteristics and are relatively advantageous also in terms of the cost. When a polylactic acid is applied to flexible films represented by polyolefins such as polyethylene, since the resulting films lack flexibility and impact resistance, a variety of attempts have been made in order to improve such characteristics for practical applications.

### PRIOR ART DOCUMENTS

### PATENT DOCUMENTS

For example, Patent Document 1 discloses a film which comprises a crystalline polylactic acid-based resin, a plasticizer and a nucleating agent as essential components and has prescribed thermal properties. In addition, Patent Document 2 discloses a technology for performing a crystallization treatment on a film which comprises a polylactic acid-based resin composed of a weak-crystalline or amorphous polylactic acid and a crystalline polylactic acid, a plasticizer and an anti-clouding agent. Patent Document 3 discloses a film which is composed of a composition comprising a polylactic acid-based resin and a plasticizer and has prescribed film the elongation, thickness and thermal contraction rate.

Patent Document 1: JP 2002-146170A

Patent Document 2: JP 2006-063308A

Patent Document 3: JP 2009-138085A

### SUMMARY OF THE INVENTION

### PROBLEMS TO BE SOLVED BY THE INVENTION

In those technologies that are disclosed in the above-described Patent Documents 1 and 2, the anti-blocking property and the anti-bleeding property are not sufficiently attained, and there is no disclosure at all with regard to a technology for improving the tear resistance and impact resistance of a film.

Further, in the technology disclosed in Patent Document 3, excellent anti-blocking property and anti-bleeding property are attained; however, Patent Document 3 offers not disclosure at all with regard to a technology relating to an improvement in the tear resistance.

As described in the above, a variety of investigations have been conducted on a polylactic acid-based film which has excellent flexibility, tear resistance and impact resistance as well as excellent anti-blocking property and anti-bleeding property and exhibits good effects particularly when prepared by an inflation method; however, such a film has not been achieved.

Therefore, in view of the above-described background in the prior art, an object of the present invention is to provide a polylactic acid-based film having excellent tear resistance and impact resistance as well as excellent anti-blocking property and anti-bleeding property, which exhibits good effects particularly when prepared by an inflation method.

MEANS FOR SOLVING THE PROBLEMS

The present inventors intensively studied to discover that the above-described problems can be solved by the followings, thereby completing the present invention.

That is, the polylactic acid-based film according to the present invention is a polylactic acid-based film composed of a composition comprising a resin (A), a resin (B) and a plasticizer (C), wherein the resin (A) is a polylactic acid-based resin and the resin (B) is an aliphatic polyester-based resin that are not polylactic acid-based resins and/or an aliphatic-aromatic polyester-based resin, wherein said polylactic acid-based film exhibits at least one crystallization peak in the temperature range of 105°C to 160°C when cooled from a molten state at a rate of 20°C/min by a differential scanning calorimeter and satisfies the following condition when the total calorific value of the crystallization peak(s) in the temperature range of 105°C to 160°C is defined as $\Delta Hmc_A$.

$$0.5 \leq \Delta Hmc_A \leq 9.5$$

In the polylactic acid-based film according to the present invention, it is preferred that the plasticizer (C) be a block copolymer having a polyether-based segment and a polylactic acid-based segment and/or a block copolymer having a polyester-based segment and a polylactic acid-based segment.

In the polylactic acid-based film according to the present invention, it is preferred that the resin (B) be at least one selected from the group consisting of polybutylene succinates, polybutylene succinate-adipates and polybutylene adipate-terephthalates.

In the polylactic acid-based film according to the present invention, it is preferred that the resin (B) have a melt viscosity of 400 to 1,000 Pa·s at a temperature of 200°C and a shear rate of 100 sec$^{-1}$.

In the polylactic acid-based film according to the present invention, it is preferred that the resin (B) be a polybutylene adipate-terephthalate which has a melt viscosity of 600 to 700 Pa·s at a temperature of 200°C and a shear rate of 100 sec$^{-1}$.

In the polylactic acid-based film according to the present invention, it is preferred that the average elongation ($E_L$) (%) in the longitudinal direction and the transverse direction (the direction perpendicular to the longitudinal direction) at 5°C and the average elongation ($E_H$) (%) in the longitudinal direction and the transverse direction at 23°C satisfy the following condition.

$$E_L/E_H \geq 0.70$$

It is preferred that the polylactic acid-based film according to the present invention comprise at least one selected from the group consisting of melamine-based compounds, metal phenylphosphonates, benzenecarboamide derivatives, talcs, clays, micas and carbon blacks in an amount of 0.1 to 20% by mass with respect to a total of 100% by mass of the above-described composition.

In the polylactic acid-based film according to the present invention, it is preferred that the resin (A) be a mixture of a crystalline polylactic acid-based resin and an amorphous polylactic acid-based resin.

In the polylactic acid-based film according to the present invention, it is preferred that the tensile elastic moduli in the longitudinal and transverse directions be each 100 to 1,500 MPa.

EFFECTS OF THE INVENTION

By the present invention, a polylactic acid-based film having excellent flexibility, tear resistance and impact resistance as well as excellent anti-blocking property and anti-bleeding property, which exhibits good effects particularly when prepared by an inflation method, can be provided. The polylactic acid-based film according to the present invention can be preferably used mainly in those applications where flexibility, tear resistance and impact resistance are required, such as agricultural/forestry applications including agricultural mulching films and fumigation films and a variety of packaging applications including trash bags, compost bags, grocery bags for fruits, vegetables and the like and bags for various industrial products.

MODE FOR CARRYING OUT THE INVENTION

The present invention was made as a result of intensive studies carried out to solve the above-described problems, that is, a polylactic acid-based film which has excellent flexibility, tear resistance and impact resistance as well as excellent anti-blocking property and anti-bleeding property and exhibits good effects particularly when prepared by an inflation method, and successfully solved the above-described problems for the first time by controlling the crystallization peak exhibited by a composition having a specific constitution when it is cooled by a differential scanning calorimeter from a molten state at a rate of 20°C/min and the calorific value thereof within a certain condition. That is, the present invention is a polylactic acid-based film composed of a composition comprising a resin (A), a resin (B) and a plasticizer (C), wherein the resin (A) is a polylactic acid-based resin and the resin (B) is an aliphatic polyester-based resin that are not polylactic acid-based resins and/or an aliphatic-aromatic polyester-based resin, wherein said polylactic acid-based film exhibits at least one crystallization peak in the temperature range of 105°C to 160°C when cooled from a molten state at a rate of 20°C/min by a differential scanning calorimeter and satisfies the following condition when the total calorific value of the crystallization peak(s) in the temperature range of 105°C to 160°C is defined as $\Delta Hmc_A$.

$$0.5 \leq \Delta Hmc_A \leq 9.5$$

The polylactic acid-based film according to the present invention will now be described.

(Resin (A) (polylactic acid-based resin))

It is important that the polylactic acid-based film according to the present invention be composed of a composition comprising a resin (A). Here, the "resin (A)" refers to a polylactic acid-based resin. Further, a "polylactic acid-based resin" refers to a copolymer having an L-lactic acid unit and/or a D-lactic acid unit as main constituent(s). Here, the term "main constituent" means that the lactic acid unit assumes the largest ratio in 100 mol% of all monomer units contained in the copolymer and the ratio of the lactic acid unit is preferably 70 to 100 mol% in 100 mol% of all monomer units.

The term "poly-L-lactic acid" used herein refers to a polylactic acid copolymer which contains an L-lactic acid unit at a ratio of higher than 50 mol% to 100 mol% with respect to 100 mol% of all lactic acid units. Meanwhile, the term "poly-D-lactic acid" used herein refers to a polylactic acid copolymer which contains a D-lactic acid unit at a ratio of higher than 50 mol% to 100 mol% with respect to 100 mol% of all lactic acid units.

The crystallinity of a poly-L-lactic acid resin per se varies depending on the content of D-lactic acid unit. That is, when the content of D-lactic acid unit in the poly-L-lactic acid is high, the crystallinity thereof is low and the resin becomes more amorphous, while when the content of D-lactic acid unit in the poly-L-lactic acid is low, the crystallinity thereof becomes high. In the same manner, the crystallinity of a poly-D-lactic acid resin per se varies depending on the content of L-lactic acid unit. That is, when the content of L-lactic acid unit in the poly-D-lactic acid is high, the crystallinity thereof is low and the resin becomes more amorphous, while when the content of L-lactic acid unit in the poly-L-lactic acid is low, the crystallinity thereof becomes high.

The content of L-lactic acid unit in the poly-L-lactic acid used in the present invention or the content of D-lactic acid unit in the poly-D-lactic acid used in the present invention is, from the standpoint of maintaining the mechanical strength of the composition, preferably 80 to 100 mol%, more preferably 85 to 100 mol%, with respect to 100 mol% of all lactic acid units.

The term "crystalline polylactic acid-based resin" used herein refers to a polylactic acid-based resin in which a heat of crystal fusion originated from a polylactic acid component is observed when the polylactic acid-based resin is sufficiently crystallized with heating and then measured in an appropriate temperature range by a differential scanning calorimeter (DSC).

Meanwhile, the term "amorphous polylactic acid-based resin" used herein refers to a polylactic acid-based resin which does not exhibit a definite melting point when it is measured in the same manner.

As described later, it is preferred that the resin (A) be a mixture of a crystalline polylactic acid-based resin and an amorphous polylactic acid-based resin.

In the polylactic acid-based resin used in the present invention, monomer unit(s) other than lactic acid may be copolymerized as well. Examples of other monomers include glycol compounds such as ethylene glycol, propylene glycol, butanediol, heptanediol, hexanediol, octanediol, nonanediol, decanediol, 1,4-cyclohexanedimethanol, neopentyl glycol, glycerin, pentaerythritol, bisphenol A, polyethylene glycol, polypropylene glycol and polytetramethylene glycol; dicarboxylic acids such as oxalic acid, adipic acid, sebacic acid, azelaic acid, dodecanedioic acid, malonic acid, glutaric acid, cyclohexanedicarboxylic acid, terephthalic acid, isophthalic acid, phthalic acid, naphthalenedicarboxylic acid, bis(p-carboxyphenyl)methane, anthracenedicarboxylic acid, 4,4'-diphenyl ether dicarboxylic acid, 5-sodium sulfoisophthalic acid and 5-tetrabutylphosphonium isophthalic acid; hydroxycarboxylic acids such as glycolic acid, hydroxypropionic acid, hydroxybutyric acid, hydroxyvaleric acid, hydroxycaproic acid and hydroxybenzoic acid; and lactones such as caprolactone, valerolactone, propiolactone, undecalactone and 1,5-oxepane-2-one. The copolymerized amount of the above-described other monomer unit(s) is preferably 0 to 30 mol%, more preferably 0 to 10 mol%, with respect to 100 mol% of all monomer units contained in the polylactic acid-based resin polymer. Here, among the above-described monomer units, a biodegradable component is preferably selected in accordance with the intended use of the resin.

Further, in cases where the main component of the polylactic acid-based resin used in the present invention is poly-L-lactic acid or poly-D-lactic acid, it is also preferred to admix a small amount of poly-D-lactic acid or poly (L-lactic acid), respectively. The reason for this is because the stereocomplex crystals formed by this function as the later-described nucleating agent and the transparency of the resulting film can be better maintained as compared to a case where the later-described nucleating agent is added. In this case, from the standpoint of attaining efficient formation of stereocomplex crystals, it is preferred that the mass average molecular weight of the polylactic acid to be admixed in a small amount be smaller than that of the main polylactic acid component. The mass average molecular weight of the polylactic acid to be admixed in a small amount is preferably 0.5 to 50%, more preferably 1 to 40%, still more preferably 2 to 30%, of the mass average molecular weight of the main polylactic acid component.

Further, from the standpoint of improving the heat resistance, it is also preferred that the polylactic acid-based resin used in the present invention be a polylactic acid block copolymer constituted by a segment composed of L-lactic acid unit and a segment composed of D-lactic acid unit. In this case, since such a polylactic acid block copolymer forms stereocomplex crystals within the molecule, a melting point thereof becomes higher than a normal crystal. In order to allow stereocomplex crystals to be efficiently formed, when the mass average molecular weight of the polylactic acid block copolymer and the maximum mass average molecular weight per unit segment are defined as X and Y, respectively, it is preferred that the segment length satisfy $Y < X/2$.

In order to satisfy practical mechanical properties, the mass average molecular weight of the polylactic acid-based resin used in the present invention is preferably 50,000 to 500,000, more preferably 80,000 to 400,000, still more preferably 100,000 to 300,000. The term "mass average molecular weight" used herein refers to a molecular weight which is measured by gel permeation chromatography using a chloroform solvent and then calculated by a conversion method based on polymethyl methacrylate.

As a method of producing the polylactic acid-based resin, although the details thereof will be described later, a known polymerization method can be employed, and examples thereof include a direct polymerization from lactic acid and a ring-opening polymerization mediated by a lactide.

It is preferred that the polylactic acid-based film according to the present invention comprise the resin (A) in an amount of 30 to 95% by mass with respect to 100% by mass of the whole composition constituting the polylactic acid-based film. By controlling the content of the resin (A) (a polylactic acid-based resin) at not less than 30% by mass with respect to 100% by mass of the whole composition, excellent tear resistance and impact resistance are attained and the degree of biomass (content of plant-derived materials) becomes high. At the same time, by controlling the content of the resin (A) (a polylactic acid-based resin) at not higher than 95% by mass, excellent flexibility is attained. The content of the resin (A) (a polylactic acid-based resin) is more preferably 35 to 90% by mass, still more preferably 40 to 85% by mass, with respect to 100% by mass of the whole composition.

(Resin (B) (an aliphatic polyester-based resin that are not polylactic acid-based resins and/or an aliphatic-aromatic polyester-based resin))

It is important that the polylactic acid-based film according to the present invention be composed of a composition comprising a resin (B) for expression of flexibility, tear resistance and impact resistance. Here, the resin (B) is an aliphatic polyester-based resin that are not polylactic acid-based resins and/or an aliphatic-aromatic polyester-based resin. Further, in order to allow the film to express biodegradability, it is preferred that the resin (B) be also biodegradable. These resins also play a role in adjustment of the biodegradation rate as well as formation of a stable bubble by controlling the melt viscosity of the whole composition constituting the polylactic acid-based film particularly in an inflation film formation method.

As the aliphatic polyester-based resin that is not a polylactic acid-based resin, for example, polyglycolic acid, poly(3-hydroxybutyrate), poly(3-hydroxybutyrate-3-hydroxyvalerate), polycaprolactone or an aliphatic polyester composed of an aliphatic diol such as ethylene glycol or 1,4-butanediol and an aliphatic dicarboxylic acid such as succinic acid or adipic acid is preferably employed.

As the aliphatic-aromatic polyester-based resin , for example, a poly(butylene succinate-terephthalate) or a poly(butylene adipate-terephthalate) is preferably employed.

Thereamong, from the standpoint of excellent effects of improving the flexibility, tear resistance and impact resistance, as the resin (B), at least one selected from the group consisting of polybutylene succinates, polybutylene succinate-adipates and polybutylene adipate-terephthalates is/are more preferably employed. Thereamong, a polybutylene adipate-terephthalate, which is aliphatic-aromatic polyester, has the greatest effects of improving the flexibility, tear resistance and impact resistance.

The amount of the resin (B) (an aliphatic polyester-based resin that are not polylactic acid-based resins and/or an aliphatic-aromatic polyester-based resin) contained in the polylactic acid-based film according to the present invention is preferably 5 to 45% by mass with respect to 100% by mass of the whole composition constituting the polylactic acid-based film. When the amount is not less than 5% by mass, effects of improving the flexibility, tear resistance and impact resistance are likely to be attained, and when the amount is 45% by mass or less, mainly in a field where biodegradability is required, particularly in agricultural/forestry applications, the film can be imparted with an appropriate biodegradability and has a high degree of biomass; therefore, such an amount of the resin (B) is preferred. The amount of the resin (B) (an aliphatic polyester-based resin that are not polylactic acid-based resins and/or an aliphatic-aromatic polyester-based resin) is more preferably 10 to 40% by mass, still more preferably 15 to 35% by mass, with respect to 100% by mass of the whole composition.

(Plasticizer (C))

It is important that the polylactic acid-based film according to the present invention be composed of a composition comprising a plasticizer (C) mainly for the purpose of imparting the film with flexibility.

Examples of the plasticizer (C) used in the present invention include phthalate-based plasticizers such as diethyl phthalate, dioctyl phthalate and dicyclohexyl phthalate; aliphatic dibasic acid ester-based plasticizers such as di-1-butyl adipate, di-n-octyl adipate, di-n-butyl sebacate and di-2-ethylhexyl azelate; phosphate-based plasticizers such as diphenyl-2-ethylhexyl phosphate and diphenyloctyl phosphate; hydroxy polyvalent carboxylic acid ester-based plasticizers such as tributyl acetylcitrate, tri-2-ethylhexyl acetylcitrate and tributyl acetylcitrate; fatty acid ester-based plasticizers such as methyl acetylricinoleate and amyl stearate; polyhydric alcohol ester-based plasticizers such as glycerin triacetate and triethylene glycol dicaprylate; epoxy-based plasticizers such as epoxidized soybean oil, epoxidized linseed oil fatty acid butyl ester and octyl epoxystearate; polyester-based plasticizers such as polypropylene glycol sebacate; polyalkylene ether-based plasticizers; ether ester-based plasticizers; and acrylate-based plasticizers. It is also possible to use a mixture composed of a plurality of these plasticizers as the plasticizer (C).

Particularly, in order to inhibit bleeding, maintain the transparency and improve the plasticizing efficiency, all of the plasticizers (C) contained in the composition constituting the polylactic acid-based film have a solubility parameter, SP, of preferably $(16 \text{ to } 23)^{1/2}\text{MJ/m}^3$, more preferably $(17 \text{ to } 21)^{1/2}\text{MJ/m}^3$. Here, the solubility parameter can be calculated by the method described in P. Small, J. Appl. Chem., 3, 71 (1953). Further, among such plasticizers, from the standpoint of maintaining the biodegradability of the film as a whole, it is preferred that the plasticizer (C) be a biodegradable plasticizer(s).

Further, from the standpoint of the suitability for food packing applications and agricultural/forestry applications, taking into consideration the possibility for an undegraded matter to remain in a compost or agricultural field even for a brief period, it is preferred that the plasticizer (C) be one which is approved by, for example, the U.S. Food and Drug Administration (FDA) or the Japan Hygienic Olefin and Styrene Plastics Association (JHOSPA). Examples of such plasticizer (C) include triacetin, epoxidized soybean oils, epoxidized linseed oils, epoxidized oil fatty acid butyl esters, adipic acid-based aliphatic polyesters, tributyl acetylcitrate, acetylricinoleates, glycerin fatty acid esters, sucrose fatty acid esters, sorbitan fatty acid esters, dialkyl adipates, bis(alkyldiglycol)adipates and polyethylene glycols.

In addition, from the standpoints of the anti-bleeding property of the plasticizer (C) and the anti-blocking property of the film, it is preferred that the plasticizer (C) used in the present invention be one which is in a solid state at normal temperature (20°C ± 15°C), that is, one which has a melting point of higher than 35°C, such as a polyethylene glycol having a number average molecular weight of not less than 1,000. Further, from the standpoint of adjusting the temperature at which the plasticizer (C) is melt-processed with the polylactic acid-based resin, the aliphatic polyester-based resin and/or the aliphatic-aromatic polyester-based resin, the upper limit of the melting point is 150°C.

From the same standpoint, it is more preferred that the plasticizer (C) used in the present invention be a block copolymer having a polyether-based segment and a polylactic acid-based segment and/or a block copolymer having a polyester-based segment and a polylactic acid-based segment. Here, the plasticizing components are the polyether-based segment and the polyester-based segment. These block copolymers (hereinafter, referred to as "block copolymer-type plasticizer") will now be described.

The mass ratio of the polylactic acid-based segment contained in the block copolymer-type plasticizer is preferably not higher than 50% by mass of the whole block copolymer-type plasticizer since a desired flexibility can be imparted by adding a smaller amount of the plasticizer, and from the standpoint of inhibiting bleeding, the mass ratio is preferably not lower than 5% by mass. Further, it is preferred that the number average molecular weight of the polylactic acid-based segment in one molecule of the block copolymer-type plasticizer be in the range of 1,200 to 10,000. When the number average molecular weight of the polylactic acid-based segment contained in the block copolymer-type plasticizer is 1,200 or greater, sufficient affinity is generated between the block copolymer-type plasticizer and the resin (A) (a polylactic acid-based resin) and a portion of the segment is incorporated into a crystal formed by the resin (A) (a polylactic acid-based resin) to yield a so-called eutectoid. By this, an action to join the plasticizer (C) to the resin (A) is generated, so that a large effect to inhibit bleeding of the block copolymer-type plasticizer is exhibited. The number average molecular weight of the polylactic acid-based segment contained in the block copolymer-type plasticizer is more preferably 1,500 to 6,000, still more preferably 2,000 to 5,000. Here, it is preferred that the polylactic acid-based segment contained in the block copolymer-type plasticizer have either an L-lactic acid content of 95 to 100% by mass or a D-lactic acid content of 95 to 100% by mass, particularly because bleeding is thereby inhibited.

Further, although the block copolymer-type plasticizer has a polyester-based segment and/or a polyester-based segment, from the standpoint of imparting a desired flexibility with an addition thereof in a small amount, a block copolymer having a polyether-based segment and a polylactic acid-based segment is more preferred. Moreover, from the standpoint of imparting a desired flexibility with an addition of the plasticizer in a smaller amount, it is more preferred that the block copolymer having a polyester-based segment and a polylactic acid-based segment have a segment composed of a polyalkylene ether as the polyether-based segment. Specific examples of the polyether-based segment include those segments composed of, for example, a polyethylene glycol, a polypropylene glycol, a polytetramethylene glycol or a polyethylene glycol-polypropylene glycol copolymer, and a segment composed of a polyethylene glycol is particularly preferred since it has a high affinity with the resin (A) (a polylactic acid-based resin) and thus has excellent property-modifying efficiency, so that a desired flexibility can be imparted by adding a particularly small amount of the plasticizer (C).

Here, in cases where the block copolymer-type plasticizer has a segment composed of a polyalkylene ether, since the polyalkylene ether segment tends to be easily oxidized and/or thermally decomposed by the heat applied at the time of molding or the like, it is preferred that, for example, the later-described hindered phenol-based or hindered amine-based antioxidant and/or a phosphorus-based heat stabilizer be used in combination.

In cases where the block copolymer-type plasticizer has a polyester-based segment, polyglycolic acid, poly(3-hydroxybutyrate), poly(3-hydroxybutyrate-3-hydroxyvalerate), polycaprolactone or a polyester composed of an aliphatic diol such as ethylene glycol, propanediol or butanediol and an aliphatic dicarboxylic acid such as succinic acid, sebacic acid or adipic acid is suitably used as the polyester-based segment.

Here, the block copolymer-type plasticizer may contain both components of a polyether-based segment and a polyester-based segment in one molecule, or may contain either of the components. Because of the productivity and cost of the plasticizer, in cases where the plasticizer contains one of the above-described components, from the standpoint of imparting a desired flexibility by adding a smaller amount of the plasticizer, a plasticizer containing a polyether-based segment is more preferably used. In other words, the preferred mode of the block copolymer-type plasticizer is a black copolymer composed of a polyether-based segment and a polylactic acid-based segment.

Still further, it is preferred that the polyether-based segment and the polyester-based segment contained in the molecule of the block copolymer-type plasticizer have a number average molecular weight in the range of 7,000 to 20,000. By controlling the number average molecular weight in the above-described range, sufficient flexibility can be imparted to the composition constituting the polylactic acid-based resin film and the composition containing the plasticizer (C), the resin (A) (a polylactic acid-based resin) and the resin (B) can have a melt viscosity at an appropriate level, so that the film-forming properties of an inflation method or the like can be stabilized.

The order and constitution of the segment blocks of the above-described polyether-based and/or polyester-based segment(s) and polylactic acid-based segment are not particularly restricted; however, from the standpoint of more effective inhibition of bleeding, it is preferred that the molecule of the block copolymer-type plasticizer have at least one block of polylactic acid-based segment at its terminal.

Next, a case where a polyethylene glycol (hereinafter, referred to as "PEG") having a hydroxyl group at both terminals is employed as the polyester-based segment will be described concretely.

In general, the number average molecular weight of a PEG having a hydroxyl group at both terminals (hereinafter, the number average molecular weight of PEG is referred to as "$M_{PEG}$") is, when the PEG is of a commercially available product or the like, calculated from the hydroxyl group value determined by a neutralization method or the like. In a system where $w_L$ parts by mass of lactide is added to $w_E$ parts by mass of a PEG having a hydroxyl group at both terminals, by sufficiently allowing the lactide to undergo ring-opening addition polymerization reaction with both terminal hydroxyl groups of the PEG, a PLA-PEG-PLA-type block copolymer can be substantially obtained (here, the "PLA" represents a polylactic acid). This reaction is performed, as required, under the presence of a catalyst such as tin octylate. The number average molecular weight of one polylactic acid-based segment contained in the resulting block copolymer-type plasticizer can be determined substantially by an equation, $(1/2) \times (w_L/w_E) \times M_{PEG}$. Further, the mass ratio of the polylactic acid-based segment component with respect to the whole block copolymer-type plasticizer can be determined substantially by an equation, $100 \times w_E/(w_L + w_E)(\%)$. Moreover, the mass ratio of the plasticizer component(s) other than the polylactic acid-based segment component with respect to the whole block copolymer-type plasticizer can also be determined substantially by an equation, $100 \times w_E/(w_L + w_E)$ (%).

It is preferred that the amount of the plasticizer (C) contained in the composition constituting the polylactic acid-based resin film of the present invention be 5 to 30% by mass with respect to 100% by mass of the whole composition. By controlling the content of the plasticizer (C) at not less than 5% by mass, the flexibility of the resulting film is improved, and by controlling the content at not more than 30% by mass, the resulting film attains high firmness and improved ease of handling, strength and durability and the anti-bleeding property of the plasticizer is improved as well. The content of the plasticizer is preferably 7 to 25% by mass, more preferably 10 to 20% by mass, with respect to 100% by mass of the whole composition.

(Other resins)

The composition constituting the polylactic acid-based film of the present invention may also contain a thermoplastic resin(s) other than the above-described resins in order to improve a variety of physical properties. The content thereof is preferably 0.1 to 50% by mass, more preferably 0.3 to 40% by mass, still more preferably 0.5 to 30% by mass, with respect to 100% by mass of the whole composition.

Examples of the thermoplastic resin include polyacetals, polyethylenes, polypropylenes, polyamides, poly(meth) acrylates, polyphenylene sulfides, polyether ether ketones, polyesters, polysulfones, polyphenylene oxides, polyimides, polyether imides, ethylene/glycidyl methacrylate copolymers, polyester elastomers, polyamide elastomers, ethylene/ propylene terpolymers, ethylene/butene-1 copolymers, thermoplastic starches and starch-containing polymers.

Examples of the improvements in the physical properties attained by the thermoplastic resin other than a polylactic acid-based resin include an improvement in the high-temperature rigidity of the polylactic acid-based film by a poly(meth)acrylate; an improvement in the impact resistance and toughness of the polylactic acid-based film by a polyester; and promoted biodegradation of the polylactic acid-based film by a starch-containing polymer. As the starch-containing polymer, for example, a biodegradable resin "MASTER-Bi" manufactured by Novamont S.p.A. can be employed. Promotion of biodegradation is important since it is demanded in those applications where the polylactic acid-based film according to the present invention is used, particularly in the agricultural/forestry applications such as agricultural mulching films and fumigation films.

(Mixture of a crystalline polylactic acid-based resin and an amorphous polylactic acid-based resin)

It is preferred that the resin (A) (a polylactic acid-based resin) contained in the composition constituting the polylactic acid-based film of the present invention be a mixture of a crystalline polylactic acid-based resin and an amorphous polylactic acid-based resin. This is because, by using such a mixture as the resin (A), both of the advantages provided by the crystalline and amorphous polylactic acid-based resins can be exhibited.

Here, as described in the above, the term "crystalline polylactic acid-based resin" refers to a polylactic acid-based resin in which a melting point originated from a polylactic acid component is observed when the polylactic acid-based resin is sufficiently crystallized under heating and then measured in an appropriate temperature range by a differential scanning calorimeter (DSC).

Meanwhile, the term "amorphous polylactic acid-based resin" refers to a polylactic acid-based resin which does not exhibit a definite melting point when it is measured in the same manner.

That is, the use of a crystalline polylactic acid-based resin is suitable for improving the tear resistance, impact resistance, heat resistance and anti-blocking property of the film. Further, in cases where a block copolymer-type plasticizer is used as the above-described plasticizer (C), the crystalline polylactic acid-based resin forms a eutectoid with the polylactic acid-based segment contained in the block copolymer-type plasticizer, thereby exhibiting a large effect on the anti-bleeding property.

Meanwhile, the use of an amorphous polylactic acid-based resin is suitable for improving the flexibility and anti-bleeding property of the film. This is because the amorphous polylactic acid-based resin provides an amorphous moiety in which the plasticizer can disperse.

In the crystalline polylactic acid-based resin used in the polylactic acid-based film of the present invention, from the standpoint of improving the tear resistance and impact resistance, the content of L-lactic acid unit in the poly-L-lactic acid or that of D-lactic acid unit in the poly-D-lactic acid is preferably 96 to 100 mol%, more preferably 98 to 100 mol%, still more preferably 99 to 100 mol%, particularly preferably 99.5 to 100 mol%, with respect to 100 mol% of all lactic acid units.

Taking the amount of the resin (A) contained in the composition constituting the polylactic acid-based film of the present invention as 100% by mass (taking the total amount of the crystalline polylactic acid-based resin and the amorphous polylactic acid-based resin as 100% by mass), the ratio of the crystalline polylactic acid-based resin is preferably 5 to 60% by mass, more preferably 10 to 50% by mass, still more preferably 20 to 40%.

(Relationship between the melt viscosity of the resin (A) and that of the resin (B))

In the polylactic acid-based film according to the present invention, in order to improve its tear resistance, impact resistance, elongation and transparency and suppress the thermal contraction rate, the ratio ($\eta_A/\eta_B$) of the melt viscosity of the resin (A) ($\eta_A$) at a temperature of 200°C and a shear rate of 100 sec$^{-1}$ and the melt viscosity of the resin (B) ($\eta_B$) at a temperature of 200°C and a shear rate of 100 sec$^{-1}$ is preferably 0.2 to 2, more preferably 0.4 to 1.5, still more preferably 0.6 to 1.1, particularly preferably 0.6 to 1.0.

Here, in cases where the plasticizer (C) is dispersed in only one of the resin (A) and the resin (B), it is required that to determine the melt viscosity of the resin in which the plasticizer is dispersed ($\eta_A$ or $\eta_B$) in the mixture state of the resin (A) or the resin (B) and the plasticizer (C). For example, when the plasticizer (C) is the above-described block copolymer having a polyether-based segment and a polylactic acid-based segment and/or the above-described block copolymer having a polyester-based segment and a polylactic acid-based segment, the plasticizer (C) is dispersed only in the resin (A); therefore, $\eta_A$ is determined as the melt viscosity of the mixture of the resin (A) and the plasticizer (C).

Further, in order to improve the flexibility, anti-blocking property and anti-bleeding property of the polylactic acid-based film and satisfy the preferred viscosity ratio ($\eta_A/\eta_B$) at the same time, the melt viscosity of the resin (B), $\eta_B$, is preferably 400 to 1,000 Pa·s, more preferably 600 to 1,000 Pa·s. Further, in this case, it is preferred that the resin (B) be at least one selected from the group consisting of polybutylene succinates, polybutylene succinate-adipates and polybutylene adipate-terephthalates. Thereamong, a polybutylene adipate-terephthalate is preferably selected as the resin (B), and the polybutylene adipate-terephthalate has a melt viscosity of 600 to 700 Pa·s, more preferably 630 to 670 Pa·s, most preferably 645 to 655 Pa·s, at a temperature of 200°C and a shear rate of 100 sec$^{-1}$.

(Crystallization peak and calorific value)

It is important that the polylactic acid-based film according to the present invention exhibit at least one crystallization peak in the temperature range of 105 to 160°C when cooled from a molten state at a rate of 20°C/min using a differential scanning calorimeter and satisfy the following condition when the total calorific value of the crystallization peak(s) in the temperature range of 105 to 160°C is defined as $\Delta Hmc_A$.

$$0.5 \leq \Delta Hmc_A \leq 9.5$$

The present inventors discovered that flexibility, tear resistance and impact resistance can be imparted to the polylactic acid-based film by satisfying these conditions of the crystallization peak temperature and calorific value. The reason for this is because, when the above-described conditions are satisfied, in the formation of the polylactic acid-based film by melt-extrusion, particularly by an inflation method, the resin extruded from a die into the air undergoes progressive crystallization, which is effective for expression of tear resistance and impact resistance. The production method of the polylactic acid-based film according to the present invention will be described later.

It is important that the polylactic acid-based film according to the present invention exhibit at least one crystallization peak in the temperature range of 105 to 160°C when cooled from a molten state at a rate of 20°C/min using a differential scanning calorimeter. Here, the number of the crystallization peak(s) existing in the temperature range of 105 to 160°C is preferably 1 or 2.

When the $\Delta Hmc_A$ is less than 0.5, sufficient tear resistance and impact resistance are not attained. Further, when the $\Delta Hmc_A$ is greater than 9.5, sufficient flexibility is not attained.

The $\Delta Hmc_A$ is preferably $0.6 \leq \Delta Hmc_A \leq 8.0$, more preferably $0.7 \leq \Delta Hmc_A \leq 6.5$, still more preferably $0.8 \leq \Delta Hmc_A \leq 5.0$, particularly preferably $0.9 \leq \Delta Hmc_A \leq 3.5$.

It is noted here that the $\Delta Hmc_A$ is a total calorific value of the crystallization peak(s) existing in the temperature range of 105 to 160°C. Accordingly, when there is only one crystallization peak in the temperature range of 105 to 160°C, the calorific value of this crystallization peak corresponds to the $\Delta Hmc_A$. Meanwhile, when there are plural crystallization peaks in the temperature range of 105 to 160°C, a total of the calorific values of these plural crystallization peaks corresponds to the $\Delta Hmc_A$.

The method for satisfying the above-described conditions of the crystallization peak and calorific value (the polylactic acid-based film exhibits at least one crystallization peak in the temperature range of 105 to 160°C and satisfies the condition, $0.5 \leq \Delta Hmc_A \leq 9.5$) is not particularly restricted and the following method can be employed. That is, the method which can be employed is one in which a crystalline polylactic acid-based resin (1) which comprises the resin (A) (a polylactic acid-based resin), the resin (B) (an aliphatic polyester-based resin that are not polylactic acid-based resins and/or an aliphatic-aromatic polyester-based resin) and the plasticizer (C) at the above-described respective preferred ratios, (2) in which resin (A) (a polylactic acid-based resin) the content of L-lactic acid unit in poly-L-lactic acid or that of D-lactic acid unit in poly-D-lactic acid is in the above-described preferred range, is mixed with an amorphous polylactic acid-based resin at the above-described preferred ratio and (3) a specific nucleating agent is further added to the mixture in the later-described preferred amount.

Here, as the above-described nucleating agent, for example, the following ones can be used.

As an organic nucleating agent, for example, melamine-based compounds, metal phenylphosphonates, benzenecarboamide derivatives, aliphatic/aromatic carboxylic acid hydrazides, sorbitol-based compounds, amino acids, polypeptides and metal phthalocyanines can be preferably used.

Specific examples of the melamine-based compounds include melamine cyanurate and melamine polyphosphate and specific examples of the metal phenylphosphonates include zinc phenylphosphonate, magnesium phenylphosphonate and calcium phenylphosphonate. Specific examples of the benzenecarboamides derivative include N,N', N"-tricyclohexyl-1,3,5-benzenetricarboxamide.

As an inorganic nucleating agent, for example, silicate minerals such as talcs, clays, micas and kaolinites, as well as carbon blacks can be preferably used.

From the standpoint of the rate of improving the tear resistance and impact resistance as well as the standpoint of the transparency, it is preferred that the nucleating agent be at least one selected from the group consisting of melamine-based compounds, metal phenylphosphonates, benzenecarboamide derivatives, talcs, clays, micas and carbon blacks. Further, from the standpoint of the rate of improving the tear resistance and impact resistance as well as the standpoint of the transparency, the nucleating agent is particularly preferably a talc, and from the standpoint of the rate of improving the tear resistance and impact resistance, the nucleating agent is particularly preferably a carbon black.

From the above-described standpoints, those inorganic nucleating agents other than carbon blacks have an average particle size of preferably 0.5 to 7.5 $\mu$m, more preferably 0.8 to 5.0 $\mu$m, still more preferably 1.0 to 4.0 $\mu$m. It is noted here that the term "average particle size" used herein refers to D50 (median size in a particle size distribution).

In terms of the average particle size of an inorganic nucleating agent, carbon blacks are the only exception and have an average particle size of preferably 10 to 75 nm, more preferably 15 to 50 nm, still more preferably 20 to 40 nm. Here, the term "average particle size" of a carbon black refers to an average particle size which is obtained by measuring the particle size (primary particle size) of 10 arbitrary small spherical components (that have an outline formed by microcrystals and cannot be separated from one another) constituting a carbon black primary aggregate under an electron microscope at a magnification of $\times$ 100,000 and then calculating the average of the thus measured values.

The amount of the nucleating agent to be added is not particularly restricted; however, in order to allow the nucleating agent to effectively exhibit its capacity and to inhibit a reduction in the melt viscosity and deterioration of the processability and transparency that are caused by an excessive addition of the nucleating agent, the amount of the nucleating agent is preferably 0.1 to 20% by mass, more preferably 0.2 to 10% by mass, still more preferably 0.5 to 7.0% by mass, particularly preferably 1.0 to 5.0% by mass, most preferably 1.5 to 4.5% by mass, with respect to 100% by mass of the whole composition.

(Elongation)

It is preferred that the elongation of the polylactic acid-based film according to the present invention be 200% to 700% in both of the longitudinal direction and the transverse direction (the direction perpendicular to the longitudinal direction). When the elongation is not less than 200%, the tear resistance and impact resistance are improved and the film is thus not likely to be damaged when used in the agricultural/forestry applications such as agricultural mulching films and fumigation films or in various packaging applications such as trash bags and compost bags; therefore, the practical usefulness of the film is improved. In addition, when the elongation is 700% or less, the film is not likely to become loose or wrinkled when it is passed between rolls or rolled up during the formation thereof and the roll appearance and the roll-out property are improved. The elongations in the longitudinal and transverse direction are more preferably 250% to 600%, still more preferably 300% to 500%.

Further, in the polylactic acid-based film according to the present invention, it is preferred that the average elongation ($E_L$) (%) in the longitudinal direction and the transverse direction (the direction perpendicular to the longitudinal direction) at 5°C and the average elongation ($E_H$) (%) in the longitudinal direction and the transverse direction at 23°C satisfy the following condition.

$$E_L/E_H \geq 0.70$$

When used in, for example, the agricultural/forestry applications such as agricultural mulching films and fumigation films or a variety of packaging applications such as trash bags, compost bags, grocery bags for fruits, vegetables and the like and bags for various industrial products, the polylactic acid-based film according to the present invention may be worked under a relatively low temperature condition. In general, plastic films tend to have a reduced elongation at a low temperature and as a result, they are likely to be damaged or torn when worked under a low temperature condition, so that their workability is markedly deteriorated. Thus, by allowing the film elongation to satisfy the above-described condition, such deterioration of the workability can be minimized. The relationship between $E_L$ and $E_H$ is more preferably $E_L/E_H \geq$ 0.75, still more preferably $E_L/E_H \geq 0.80$. It is noted here that the upper limit of $E_L/E_H$ is 1.00.

Examples of a method for controlling the elongation in both the longitudinal and transverse directions at 200 to 700% include a method by which the contents of the polylactic acid-based resin, the aliphatic polyester-based resin and/or the aliphatic-aromatic polyester-based resin that are not polylactic acid-based resins and the plasticizer are each controlled in the above-described respective ranges.

The method for controlling $E_L$ and $E_H$ to satisfy the condition, $E_L/E_H \geq 0.70$, is not particularly restricted and examples thereof include, in addition to the above-described method of satisfying the elongation, the method described in the section of "Crystallization peak and calorific value" in which the nucleating agent is added in the above-described preferred amount.

(Elastic modulus)

In the polylactic acid-based film according to the present invention, in order to impart thereto sufficient flexibility, the tensile elastic moduli in the longitudinal and transverse directions are each preferably 100 to 1,500 MPa, more preferably 200 to 1,200 MPa, still more preferably 300 to 1,000 MPa.

Examples of a method for controlling the tensile elastic modulus in each of the longitudinal and transverse directions in the range of 100 to 1,500 MPa include a method by which the contents of the polylactic acid-based resin, the aliphatic polyester-based resin and/or the aliphatic-aromatic polyester-based resin that are not polylactic acid-based resins and the plasticizer are each controlled in the above-described respective ranges.

(Thickness)

It is preferred that the polylactic acid-based film according to the present invention have a thickness of 5 to 200 $\mu$m. When the film thickness is not less than 5 $\mu$m, the film is highly firm and has excellent ease of handling as well as good roll appearance and roll-out property. When the film thickness is not greater than 200 $\mu$m, the flexibility is improved and the film has excellent ease of handling when used in the agricultural/forestry applications such as agricultural mulching films and fumigation films or in various packaging applications such as trash bags and compost bags. In addition, particularly in an inflation method, because of the film's own weight, the resulting bubble does not become unstable. The film thickness is more preferably 7 to 150 $\mu$m, still more preferably 10 to 100 $\mu$m, yet still more preferably 12 to 50 $\mu$m.

(Thermal contraction rate)

In the polylactic acid-based film according to the present invention, it is preferred that the thermal contraction rates in the longitudinal and transverse directions when the film is treated at 65°C for 30 minutes be -5 to 5%. By controlling the thermal contraction rate at not higher than 5%, film contraction with time after the film is rolled up and deterioration of the roll appearance caused by so-called roll-tightening can be inhibited. In addition, occurrence of blocking caused by an excessively high rolling hardness can also be suppressed. Further, by controlling the thermal contraction rate at not less than -5%, deterioration of the roll appearance caused by relaxation of the film with time in the longitudinal direction after the film is rolled up can be inhibited. It is noted here that a negative thermal contraction rate of less than 0 means that the film elongates.

(Organic lubricant)

It is preferred that the composition constituting the polylactic acid-based film of the present invention comprise an organic lubricant in an amount of 0.1 to 5% by mass with respect to 100% by mass of the whole composition. In this case, blocking after the film is rolled up can be favorably inhibited. In addition, problems such as a reduction in the melt viscosity and deterioration of the processability, which are caused by adding the organic lubricant in an excessive amount, as well as defective film outer appearance such as bleeding and a haze increase, are also not likely to occur.

Examples of the organic lubricant include aliphatic hydrocarbon-based lubricants such as liquid paraffins, natural paraffins, synthetic paraffins and polyethylenes; fatty acid-based lubricants such as stearic acid, lauric acid, hydroxystearic acid and hard castor oil; fatty acid amide-based lubricants such as stearic acid amides, oleic acid amides, erucic acid amides, lauric acid amides, ethylene bis-stearic acid amides, ethylene bis-oleic acid amides and ethylene bis-lauric acid amides; fatty acid metal salts such as aluminum stearate, lead stearate, calcium stearate and magnesium stearate; polyhydric alcohol fatty acid (partial) ester-based lubricants such as glycerin fatty acid esters and sorbitan fatty acid esters; and long-chain fatty acid ester-based lubricants such as butyl stearates and long-chain ester waxes such as montan wax. Preferred thereamong are fatty acid amide-based organic lubricants since the effects of addition are likely to be attained in a small amount because of their moderate compatibility with polylactic acid. Thereamong, from the standpoint of allowing more favorable anti-blocking property to be expressed, organic lubricants having a relatively high melting point, such as ethylene bis-stearic acid amides, ethylene bis-oleic acid amides and ethylene bis-lauric acid amides, are preferred.

(Haze)

The polylactic acid-based film according to the present invention has a haze value of preferably not higher than 50%, more preferably not higher than 40%. At a haze value of not higher than 50%, when the film is molded and processed to be used in a variety of packaging applications such as grocery bags for fruits, vegetables and the like and bags for various industrial products, the resulting bags are more preferably used in many cases because, for example, the contents therein can be easily seen and their high design properties provide good presentation as commercial products. Here, because of the general characteristics of polylactic acids, it is difficult to attain the haze value of the polylactic acid-based film at less than 1%; therefore, the lower limit of the haze value is about 1%.

(Additive)

The composition constituting the polylactic acid-based film of the present invention may also contain an additive(s) other than those described in the above within the range where the effects of the present invention are not adversely affected. For example, the composition constituting the polylactic acid-based film of the present invention may contain a known antioxidant, UV stabilizer, coloring inhibitor, flatting agent, deodorizing agent, flame retardant, anti-weathering agent, antistatic agent, oxidation inhibitor, ion-exchange agent, adhesion-imparting agent, antifoaming agent, coloring pigment and/or dye.

Examples of the antioxidant include hindered phenol-based and hindered amine-based antioxidants.

Examples of the coloring pigment include inorganic pigments such as carbon blacks, titanium oxide, zinc oxide and iron oxide; and organic pigments such as cyanine-based, styrene-based, phthalocyanine-based, anthraquinone-based, perinone-based, isoindolinone-based, quinophthalone-based, quinacridone-based and thioindigo-based pigments.

(Particle)

In the composition constituting the polylactic acid-based film of the present invention, a particle may also be added in order to impart easy lubrication, improved anti-blocking property and the like to a processed article of the film. As the inorganic particle, for example, fine particles made of silicon oxides such as silica, various carbonates such as calcium carbonate, magnesium carbonate and barium carbonate, various sulfates such as calcium sulfate and barium sulfate, various complex oxides such as wollastonite, potassium titanate, aluminum boride and sepiolite, various phosphates such as lithium phosphate, calcium phosphate and magnesium phosphate, various oxides such as aluminum oxide, titanium oxide, zirconium oxide and zinc oxide, hydroxides such as aluminum hydroxide and magnesium hydroxide and various salts such as lithium fluoride can be employed.

These inorganic particles may be surface-treated with a fatty acid, a resin acid, a titanate coupling agent, a silane coupling agent, a phosphoric acid ester or the like in order to improve their compatibility with a resin and inhibit aggregation in a resin.

Further, as the organic particle, fine particles made of, for example, calcium oxalate, a terephthalate of calcium, barium, zinc, manganese, magnesium or the like is employed. Examples of cross-linked polymer particle include fine particles made of a monopolymer or copolymer of vinyl monomers such as divinylbenzene, styrene, acrylic acid or methacrylic acid. In addition, organic fine particles of polytetrafluoroethylenes, benzoguanamine resins, thermosetting epoxy resins, unsaturated polyester resins, thermosetting urea resins, thermosetting phenol resins and the like can also be preferably employed.

The average particle size is not particularly restricted for either of the inorganic particle and the organic particle; however, it is preferably 0.01 to 5 μm, more preferably 0.1 to 4 μm, most preferably 0.5 to 3 μm.

(Terminal carboxyl group)

Particularly in those cases where biodegradability is not required, such as packagings of various industrial products, and in those applications where a film having shelf-life stability is more preferred, from the standpoints of inhibiting a reduction of the strength caused by hydrolysis of the polylactic acid-based resin and imparting the film with good durability, the film has a terminal carboxyl group concentration of preferably not higher than 30 equivalents/$10^3$ kg, more preferably not higher than 20 equivalents/$10^3$ kg, still more preferably not higher than 10 equivalents/$10^3$ kg. When the film has a terminal carboxyl group concentration of not higher than 30 equivalents/$10^3$ kg, since the concentration of terminal carboxyl groups also functioning as autocatalyst for hydrolysis is sufficiently low, good durability can be imparted to the film in many cases, although this also depends on the application thereof.

Examples of a method for controlling the terminal carboxyl group concentration of the film at not higher than 30 equivalents/$10^3$ kg include a method of controlling the terminal carboxyl group concentration by a catalyst used in the synthesis of the polylactic acid-based resin or thermal history thereof; a method in which the thermal history is reduced by, for example, lowering the extrusion temperature at the time of film formation or shortening the retention time; and a method in which terminal carboxyl groups are blocked using a reactive compound.

In the method where terminal carboxyl groups are blocked using a reactive compound, it is preferred that at least some of the carboxyl groups in the film be blocked and it is more preferred that all of the carboxyl groups be blocked. Examples of the reactive compound include condensation reaction-type compounds such as aliphatic alcohols and amine compounds; and addition reaction-type compounds such as carbodiimide compounds, epoxy compounds and oxazoline compounds; however, addition reaction-type compounds are preferred since they are not likely to generate excessive by-products at the time of reaction. Thereamong, carbodiimide compounds are preferred because of their reaction efficiency.

(Production method)

The method of producing the polylactic acid-based film of the present invention will now be described concretely; however, the present invention is not restricted thereto.

A polylactic acid-based resin, which is the resin (A) of the present invention, can be obtained by, for example, the following method. As starting materials, a lactic acid component of L-lactic acid or D-lactic acid is used as a main starting material and a hydroxycarboxylic acid other than the lactic acid component can be used in combination. It is also possible to use a cyclic ester intermediate of a hydroxycarboxylic acid, such as lactide or glycolide, as a starting material. Further, a dicarboxylic acid or a glycol can also be used.

The polylactic acid-based resin can be obtained by a method in which the above-described starting materials are directly subjected to dehydration and condensation or a method in which the above-described cyclic ester intermediate is subjected to ring-opening polymerization. For example, in cases where the polylactic acid-based resin is produced by direct dehydration-condensation, a polymer having a high molecular weight can be obtained by performing polymerization by a method in which a lactic acid or a lactic acid and a hydroxycarboxylic acid is/are azeotropically dehydrated and condensed preferably in the presence of an organic solvent, particularly a phenyl ether-based solvent, and water is removed from the solvent which is particularly preferably azeotropically distilled out and the resulting substantially anhydrous solvent is then returned to the reaction system.

Further, it is also known that a polymer having a high molecular weight can be obtained by subjecting a cyclic ester intermediate such as lactide to ring-opening polymerization under reduced pressure with a catalyst such as tin octylate. In this case, a polymer having a small lactide content can be obtained by utilizing, for example, a method of adjusting the conditions for removing water content and low molecular weight compounds at the time of heating the materials to reflux in an organic solvent, a method of inhibiting depolymerization reaction by inactivating the catalyst after the completion of the polymerization reaction and a method of heat-treating the thus produced polymer.

The composition constituting the polylactic acid-based film of the present invention, that is, a composition which comprises the resin (A) (a polylactic acid-based resin), the resin (B) (an aliphatic polyester-based resin that are not polylactic acid-based resins and/or an aliphatic-aromatic polyester-based resin), the plasticizer (C) and other component (s) such as a nucleating agent can be produced by dissolving these components in a solvent, uniformly mixing the resulting solution and then removing the solvent; however, it is preferred to employ a melt-kneading method in which the composition is produced by melt-kneading the above-described components, which method does not require those steps of dissolving the materials into a solvent and removing the solvent and is thus practical. Such melt-kneading method is not particularly restricted and it may employ a known mixing apparatus which is normally used, such as a kneader, a roll mill, a Banbury mixer, a uniaxial extruder or a biaxial extruder. Thereamong, from the standpoint of the productivity, a uniaxial or biaxial extruder is preferably employed.

The melt-kneading temperature is preferably in the range of 150°C to 240°C and, from the standpoint of inhibiting degradation of the polylactic acid-based resin, it is more preferably in the range of 190°C to 210°C.

The polylactic acid-based film according to the present invention can be obtained from, for example, a composition obtained by the above-described method in accordance with an existing film production method such as a known inflation method or T-die casting method.

In the production of the polylactic acid-based film according to the present invention, for example, when a composition obtained by the above-described method is once pelletized and then again melt-kneaded to be extruded and made into a film, it is preferred to use a composition having a water content of not higher than 1,200 ppm, preferably not higher than 500 ppm, more preferably not higher than 200 ppm and containing a polylactic acid-based resin and the like, which is obtained by, for example, drying the pellet at a temperature of 60 to 100°C for 6 hours or longer. Further, it is also preferred that the lactide content in the composition containing a polylactic acid-based resin and the like be reduced by vacuum-drying the composition under a high vacuum condition having a vacuum level of not higher than 10 Torr. By controlling the water content in the composition containing a polylactic acid-based resin and the like at not higher than 1,200 ppm and reducing the lactide content, hydrolysis of the composition during melt-kneading can be inhibited and a reduction in the molecular weight can also be thereby inhibited, so that an appropriate level of melt viscosity can be attained in the resulting composition containing a polylactic acid-based resin and the like and the film formation step can be stabilized, all of which are preferred. Further, from the same standpoint, when the composition is once pelletized or melt-extruded for film formation, it is preferred that the melt-extrusion be carried out while removing volatile matters such as water and low molecular weight substances using a biaxial extruder equipped with a vent hole.

In cases where the polylactic acid-based film according to the present invention is produced by an inflation method, for example, a composition prepared by the above-described method may be melt-extruded into a circular die using a biaxial extruder equipped with a vent hole and then extruded from the circular die while feeding thereinto a dry air to form a balloon (bubble). After uniformly air-cooling and solidifying the thus formed balloon by aeration and then drawing out the resultant at a prescribed drawing rate while folding the drawn film in a flat form using nip rolls, the resultant may be, as required, cut-opened at both ends or one of the ends and rolled up. Thereafter, the resulting film may also be subjected to a heat treatment using a hot roll or an oven in order to inhibit thermal contraction of the film.

In this case, the film thickness may be adjusted to be 5 to 200 μm by adjusting the rate of extrusion from the circular die, the drawing rate of the nip rolls and/or the bubble blow ratio. From the standpoints of the thickness accuracy and uniformity, it is preferred to employ a spiral-shaped circular die, and from the same standpoints, it is preferred to employ a rotary circular die.

Further, the temperature at which the composition constituting the polylactic acid-based film of the present invention is extruded is normally in the range of 150 to 240°C; however, in order to advance crystallization, which is effective for allowing good tear resistance and impact resistance to be expressed, the temperature of the circular die is important and it is in the range of 150 to 190°C, preferably 155 to 185°C.

As for the bubble blow ratio, although it depends on the relation with the extrusion rate and the drawing rate of the nip rolls, an excessively low or high bubble blow ratio may result in an anisotropic film and, in particular, the resulting bubble is likely to become unstable when the bubble blow ratio is excessively high. The bubble blow ratio is normally in the range of 2.0 to 4.0.

Further, after the composition is molded into a film, the resulting film may also be subjected to a variety of surface treatments in order to improve the printing property, suitability for lamination, suitability for coating and the like. Examples of surface treatment method include corona discharge treatment, plasma treatment, flame treatment and acid treatment, and any of these methods can be employed. However, the most preferred method is corona discharge treatment because it can be performed consecutively, the apparatus thereof can be easily installed to an existing film-forming equipment and the treatment is simple.

Since the polylactic acid-based film according to the present invention has excellent anti-bleeding property and anti-blocking property, it can be rolled out smoothly without any problem from a film roll obtained by rolling up the film.

EXAMPLES

The present invention will now be described more concretely by way of examples thereof; however, the present invention is not restricted to the following examples by any means.

[Measurement and Evaluation Methods]

Measurements and evaluations shown in examples were carried out under the following conditions.

(1) Crystallization peak temperature (°C) and calorific value $\Delta Hmc_A$ (J/g)

In a differential scanning calorimeter RDC220 manufactured by Seiko Instruments Inc., 5 mg of a film sample was placed on an aluminum dish and heated from 25°C to 250°C at a heating rate of 20°C/min. After melting and retaining the film sample at 250°C for 5 minutes, the film sample was allowed to cool to 25°C at a cooling rate of 20°C/min. Based on the crystallization peak observed at the time of this cooling, the crystallization peak temperature and the calorific value were determined in accordance with the method prescribed in JIS K7121 (1987). It is noted here that ΔHmc$_A$ was determined by adding up the calorific value of the crystallization peaks existing in the region of 105°C to 160°C.

(2) Average elongation (E$_L$) (%) in the longitudinal and transverse directions at 5°C and average elongation (E$_H$) (%) in the longitudinal and transverse directions at 23°C

Using TENSILON UCT-100 equipped with an incubator (manufactured by Orientec Co., Ltd.), stress-strain measurements were carried out at 5°C and 23°C.

Specifically, a sample was cut out into a strip-shape having a length of 150 mm and a width of 10 mm in the measurement direction and, in an incubator whose temperature was adjusted to 5°C, the sample was measured in accordance with the method prescribed in JIS K7127 (1999) at an initial tensile chuck distance of 50 mm and a tensile rate of 200 mm/min. For both the longitudinal and transverse directions, the average elongation (%) was determined from 10 measurements and defined as E$_{LMD}$ and E$_{LTD}$, respectively. The E$_L$ was calculated using the following equation.

$$E_L = (E_{LMD} + E_{LTD})/2$$

In the same manner, measurements were carried out in an incubator whose temperature was adjusted to 23°C. For both the longitudinal and transverse directions, the average elongation (%) was determined from 10 measurements and defined as E$_{HMD}$ and E$_{HTD}$, respectively. The E$_H$ was calculated using the following equation.

$$E_H = (E_{HMD} + E_{HTD})/2$$

(3) Tensile elastic modulus (MPa)

In accordance with the method described in (2), stress-strain measurements were carried out at 23°C. Using the first linear part of the thus obtained stress-strain curve, the tensile elastic modulus was calculated by dividing the difference in the stress between two points on the straight line by the difference in the strain between the same two points. A total of 10 measurements were carried out and the average thereof was used. The average tensile elastic modulus was calculated for both the longitudinal and transverse directions.

(4) Tearing strength (N/mm)

The tensile strength was measured in accordance with the method prescribed in JIS K7128-2 using a tear propagation resistance meter (ELMENDORF) manufactured by Toyo Seiki Seisaku-Sho, Ltd. The sample size was 63 mm in the tearing direction and 76 mm in the direction perpendicular to the tearing direction and a 20-mm notch was created in the tearing direction. When the remaining 43 mm of the sample was pulled and torn, the indicated value was recorded.

(5) Impact strength (kN·m/mm)

Using a film impact tester (manufactured by Toyo Seiki Seisaku-Sho, Ltd.) and a hemispherical impact head of 1/2 inch in diameter, the impact strength was measured in an atmosphere having a temperature of 23°C and a humidity of 65% RH. A total of 10 measurements were carried out for each level and the average thereof was calculated. Further, the thus obtained value was divided by the average thickness (mm) of the film sample to determine the impact strength per unit thickness.

(6) Haze (%)

Using a haze meter, HGM-2DP model (manufactured by Suga Test Instruments Co., Ltd., the haze value was measured in accordance with the method prescribed in JIS K7136 (2000). A total 5 measurements were carried out for each level and the average thereof was calculated.

(7) Roll-out property

A roll sample was stored for 3 days in an atmosphere having a temperature of 23°C and a humidity of 65% RH. Then, into the cardboard core of the roll sample, a steel shaft having a diameter smaller than the inner diameter of the cardboard core was inserted, and both ends of the steel shaft were hung on a hook to keep the roll in a leveled and freely rotatable state. When the film was rolled out at a rate of 10 m/min, the roll-out condition was visually observed and evaluated based on the following criteria.

A: The film was able to be rolled out smoothly without any problem.
C: The roll-out was occasionally discontinuous.
F: The roll-out was intermittently discontinuous.

(8) Melt viscosity

Using a flow tester, CFT-500A manufactured by Shimadzu Corporation (die size: 1 mm, die length: 10 mm, plunger cross-sectional area: 1 cm$^2$), the melt viscosity (Pa·s) was measured at a temperature of 200°C, a pre-heating time of 3 minutes and a shear rate of 100 sec$^{-1}$.

[Resin (A)]

(A1)

Poly-L-lactic acid: mass average molecular weight of 200,000, D-isomer content of 1.4%, melting point of 166°C, melt viscosity of 1,400 Pa·s at a temperature of 200°C and a shear rate of 100 sec$^{-1}$

(A2)

Poly-L-lactic acid: mass average molecular weight of 200,000, D-isomer content of 5.0%, melting point of 150°C, melt viscosity of 1,400 Pa·s at a temperature of 200°C and a shear rate of 100 sec$^{-1}$

(A3)

Poly-L-lactic acid: mass average molecular weight of 200,000, D-isomer content of 12.0%, no melting point, melt viscosity of 1,400 Pa·s at a temperature of 200°C and a shear rate of 100 sec$^{-1}$

(A4)

Poly-D-lactic acid: mass average molecular weight of 20,000, L-isomer content of 1.5%

(A5)

Poly-L-lactic acid: mass average molecular weight of 200,000, D-isomer content of 0.5%, melting point of 180°C, melt viscosity of 1,400 Pa·s at a temperature of 200°C and a shear rate of 100 sec$^{-1}$
It is noted here that the above-described mass average molecular weights were measured by Waters 2690 manufactured by Nihon Waters K.K. at a column temperature of 40°C with a chloroform solvent, using polymethyl methacrylate as the standard.

[Resin (B)]

(B1)

Polybutylene adipate-terephthalate resin (manufactured by BASF; trade name "ECOFLEX" FBX7011): melt viscosity of 1,200 Pa·s at a temperature of 200°C and a shear rate of 100 sec$^{-1}$

(B2)

Polybutylene succinate-based resin (manufactured by Mitsubishi Chemical Corporation; trade name "GSPIa" (registered trademark) AZ91T): melt viscosity of 1,050 Pa·s at a temperature of 200°C and a shear rate of 100 sec$^{-1}$

(B3)

Polybutylene succinate-adipate-based resin (manufactured by Showa Highpolymer Co., Ltd.; trade name "BIONOLLE" (registered trademark) #3001): melt viscosity of 1,250 Pa·s at a temperature of 200°C and a shear rate of 100 sec$^{-1}$

(B4)

Polybutylene adipate-terephthalate resin (manufactured by BASF; trade name "ECOFLEX" FBX7020): melt viscosity of 650 Pa·s at a temperature of 200°C and a shear rate of 100 sec$^{-1}$

(B5)

Polybutylene succinate-based resin (manufactured by Mitsubishi Chemical Corporation; trade name "GSPIa" (registered trademark) AZ81T): melt viscosity of 900 Pa·s at a temperature of 200°C and a shear rate of 100 sec$^{-1}$

(B6)

Polybutylene succinate-adipate-based resin (manufactured by Showa Highpolymer Co., Ltd.; trade name "BIONOLLE" (registered trademark) #3010): melt viscosity of 750 Pa·s at a temperature of 200°C and a shear rate of 100 sec$^{-1}$

[Plasticizer (C)]

(C1)

In a reaction vessel equipped with a stirring device, 62 parts by mass of polyethylene glycol having a number average molecular weight of 8,000, 38 parts by mass of L-lactide and 0.05 parts by mass of tin octylate were mixed and polymerized for 3 hours at 160°C under a nitrogen atmosphere to obtain a plasticizer C1 which contains a polylactic acid-based segment having a number average molecular weight of 2,500 on both ends of the polyethylene glycol having a number average molecular weight of 8,000.

(C2)

Acetyl tributyl citrate (ATBC): manufactured by Morimura Bros., Inc., trade name "CITROFLEX (registered trademark) A-4"

[Organic lubricant]

(Lubricant 1)

Ethylene bis-stearic acid amide (manufactured by Nippon Kasei Chemical Co., Ltd.; trade name "SLIPAX E" (registered trademark))

(Lubricant 2)

Stearic acid amide (manufactured by NOF Corporation; trade name "ALFLOW (registered trademark) S-10")

[Nucleating agent]

(Nucleating agent 1)

Talc (manufactured by Nippon Talc Co., Ltd.; trade name "SG-95", average particle size: 2.5 μm)

(Nucleating agent 2)

Carbon black (manufactured by Mitsubishi Chemical Corporation; trade name "RCF#45", average particle size: 24 nm)

(Nucleating agent 3)

Zinc phenylphosphonate (manufactured by Nissan Chemical Industries, Ltd.; trade name "PPA-Zn")

[Other component]

(Calcium carbonate)

Calcium carbonate (manufactured by Maruo Calcium Co., Ltd.; trade name "CALTEX R", average particle size: 2.8 $\mu$m)

[Preparation of Polylactic Acid-based Film]

(Example 1)

A mixture of 55 parts by mass of polylactic acid (A1), 16 parts by mass of a plasticizer (C1) and 1 part by mass of an organic lubricant (Lubricant 1) was placed in a biaxial extruder equipped with a vacuum vent which has a cylinder temperature of 190°C and a screw diameter of 44 mm and melt-kneaded while degassing via the vacuum vent. The resultant was then homogenized and pelletized to obtain a composition.

The thus obtained pellet composition was vacuum-dried at a temperature of 60°C for 12 hours using a rotary drum-type vacuum dryer.

The thus dried pellet composition (75% by mass) was mixed with 25% by mass of an aliphatic-aromatic polyester (B1) to ultimately obtain the composition shown in Table 1. The thus obtained composition was fed to an uniaxial extruder having a cylinder temperature of 190°C and a screw diameter of 65 mm and extruded upwardly in the form of a bubble at a blow ratio of 3.4 from a spiral-shaped circular die having a diameter of 250 mm, a lip clearance of 1.3 mm and a temperature of 155°C. The resultant was then air-cooled by a cooling ring and drawn out at a rate of 22 m/min while folding the drawn film using nip rolls provided above the die. The film was cut-opened into two sheets by cutting both ends using an edge cutter and the resulting films were each rolled up using a winder at a tension of 5.5 kgf. By adjusting the extrusion rate, a film having a thickness of 18 $\mu$m was obtained. The physical properties of the thus obtained films are shown in Table 1.

In Examples 2 to 30 and Comparative Examples 1 to 4, the respective films were obtained in the same manner as in Example 1, except that the film composition was changed as shown in Tables 1 to 3. The physical properties of the thus obtained films are shown in Tables 1 to 3.

[Table 1]

| | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|
| Composition | Resin (A) | Type | A1 | A2 | A1+A3 | A1+A3 | A1+A3 | A1+A3 | A1+A3 | A1+A3 | A1+A3 | A1+A3 | A1+A3 | A1+A3 |
| | | (wt%) | 55 | 55 | 10+45 | 20+35 | 30+25 | 40+15 | 20+35 | 20+35 | 20+35 | 20+35 | 20+35 | 20+35 |
| | Resin (B) | Type | B1 | B1 | B1 | B1 | B1 | B1 | B2 | B3 | B1 | B1 | B1 | B1 |
| | | (wt%) | 25 | 25 | 25 | 25 | 25 | 25 | 25 | 25 | 25 | 25 | 25 | 25 |
| | Plasticizer (C) | Type | C1 | C1 | C1 | C1 | C1 | C1 | C1 | C1 | C2 | C1 | C1 | C1 |
| | | (wt%) | 16 | 16 | 16 | 16 | 16 | 16 | 16 | 16 | 16 | 16 | 16 | 16 |
| | Organic lubricant | Type | Lubricant 1 | Lubricant 1 | Lubricant 1 | Lubricant 1 | Lubricant 1 | Lubricant 1 | Lubricant 1 | Lubricant 1 | Lubricant 1 | Lubricant 1 | Lubricant 2 | Lubricant 1 |
| | | (wt%) | 1 | 1 | 1 | 1 | 1 | 1 | 1 | 1 | 1 | 1 | 1 | 1 |
| | Crystal nucleating agent | Type | Nucleating agent 1 | Nucleating agent 1 | Nucleating agent 1 | Nucleating agent 1 | Nucleating agent 1 | Nucleating agent 1 | Nucleating agent 1 | Nucleating agent 1 | Nucleating agent 1 | Nucleating agent 1 | Nucleating agent 2 | Nucleating agent 3 |
| | | (wt%) | 3 | 3 | 3 | 3 | 3 | 3 | 3 | 3 | 3 | 3 | 3 | 3 |
| | Melt viscosity | $\eta_A$ Pa·s | 650 | 650 | 650 | 650 | 650 | 650 | 650 | 650 | 1400 | 650 | 650 | 650 |
| | | $\eta_B$ Pa·s | 1200 | 1200 | 1200 | 1200 | 1200 | 1200 | 1050 | 1250 | 1200 | 1200 | 1200 | 1200 |
| | | $\eta_A/\eta_B$ - | 0.54 | 0.54 | 0.54 | 0.54 | 0.54 | 0.54 | 0.62 | 0.52 | 1.17 | 0.54 | 0.54 | 0.54 |
| Film properties | Crystallization peak | Peak temperature °C | 135 | 121 | 131 | 133 | 134 | 134 | 133 | 133 | 132 | 133 | 132 | 135 |
| | | $\Delta Hmc_A$ J/g | 9.3 | 1.1 | 1.5 | 2.0 | 2.2 | 2.5 | 2.0 | 2.0 | 1.9 | 2.0 | 1.9 | 2.1 |
| | Elongation | 5°C (MD/TD) % | 280/192 | 282/238 | 324/281 | 308/269 | 300/242 | 294/216 | 289/257 | 305/263 | 293/217 | 310/272 | 333/303 | 325/289 |
| | | $E_L$ % | 236 | 260 | 303 | 289 | 271 | 255 | 273 | 284 | 255 | 291 | 318 | 307 |
| | | 23°C (MD/TD) % | 345/311 | 357/327 | 403/365 | 370/330 | 365/321 | 361/319 | 349/317 | 362/322 | 348/316 | 375/335 | 400/356 | 395/345 |
| | | $E_H$ % | 328 | 342 | 384 | 350 | 343 | 340 | 333 | 342 | 332 | 355 | 378 | 370 |
| | | $E_L/E_H$ - | 0.72 | 0.76 | 0.79 | 0.83 | 0.79 | 0.75 | 0.82 | 0.83 | 0.77 | 0.82 | 0.84 | 0.83 |
| | Tensile modulus (MD/TD) | MPa | 783/856 | 765/822 | 648/703 | 680/718 | 701/733 | 736/760 | 921/987 | 854/869 | 755/779 | 681/723 | 675/704 | 685/711 |
| | Tearing strength (MD/TD) | N/mm | 42/39 | 32/30 | 39/37 | 42/40 | 43/41 | 44/42 | 38/34 | 40/37 | 39/38 | 42/39 | 44/42 | 38/36 |
| | Impact strength | kN·m/mm | 38 | 31 | 37 | 40 | 41 | 42 | 33 | 35 | 37 | 38 | 39 | 32 |
| | Haze | % | 40 | 37 | 38 | 39 | 40 | 41 | 39 | 39 | 42 | 38 | No measure | 52 |
| | Wind off property | - | C | A | A | A | A | C | A | A | C | C | A | A |

[Table 2]

| | | | Example 13 | Example 14 | Example 15 | Example 16 | Example 17 | Example 18 | Comparative Example 1 | Comparative Example 2 | Comparative Example 3 | Comparative Example 4 |
|---|---|---|---|---|---|---|---|---|---|---|---|---|
| **Composition** | Resin (A) | Type | A1+A3 | A1+A3 | A1+A3 | A1+A3 | A1+A3 | A1+A3 | A1+A3 | A1+A3 | A1 | A1+A3 |
| | | (wt%) | 13+22 | 27+48 | 15+26 | 24+42 | 18+33 | 21+36 | 20+35 | 21+37 | 76 | 3+52 |
| | Resin (B) | Type | B1 | B1 | B1 | B1 | B1 | B1 | B1 | B1 | B1 | B1 |
| | | (wt%) | 45 | 5 | 25 | 25 | 25 | 25 | 25 | 25 | 15 | 25 |
| | Plasticizer (C) | Type | C1 | C1 | C1 | C1 | C1 | C1 | C1 | C1 | C1 | C1 |
| | | (wt%) | 16 | 16 | 30 | 5 | 16 | 16 | 16 | 16 | 5 | 16 |
| | Organic lubricant | Type | Lubricant 1 | Lubricant 1 | Lubricant 1 | Lubricant 1 | Lubricant 1 | Lubricant 1 | Lubricant 1 | Lubricant 1 | Lubricant 1 | Lubricant 1 |
| | | (wt%) | 1 | 1 | 1 | 1 | 1 | 1 | 1 | 1 | 1 | 1 |
| | Crystal nucleating agent | Type | Nucleating agent 1 | Nucleating agent 1 | Nucleating agent 1 | Nucleating agent 1 | Nucleating agent 1 | Nucleating agent 1 | Calcium carbonate | — | Nucleating agent 1 | Nucleating agent 1 |
| | | (wt%) | 3 | 3 | 3 | 3 | 7 | 1 | 3 | — | 3 | 3 |
| | Melt viscosity $\eta_A$ | Pa·s | 450 | 800 | 350 | 1150 | 600 | 650 | 650 | 650 | 1200 | 650 |
| | Melt viscosity $\eta_B$ | Pa·s | 1200 | 1200 | 1200 | 1200 | 1200 | 1200 | 1200 | 1200 | 1200 | 1200 |
| | $\eta_A/\eta_B$ | - | 0.38 | 0.67 | 0.29 | 0.96 | 0.5 | 0.54 | 0.54 | 0.54 | 1 | 0.54 |
| **Film properties** | Crystallization peak: Peak temperature | °C | 130 | 134 | 129 | 134 | 133 | 130 | No peak at 105-160°C | No peak at 105-160°C | 136 | 126 |
| | $\Delta Hmc_A$ | J/g | 1.3 | 2.4 | 1.8 | 2.1 | 2.6 | 0.8 | | | 11.1 | 0.3 |
| | Elongation 5°C (MD/TD) | % | 325/285 | 266/238 | 337/281 | 240/184 | 308/272 | 300/266 | 230/174 | 239/229 | 195/179 | 250/212 |
| | $E_L$ | % | 305 | 252 | 309 | 212 | 290 | 283 | 202 | 234 | 187 | 231 |
| | Elongation 23°C (MD/TD) | % | 373/345 | 340/298 | 381/355 | 301/263 | 368/322 | 397/357 | 298/262 | 339/303 | 279/255 | 339/311 |
| | $E_H$ | % | 359 | 319 | 368 | 282 | 345 | 377 | 280 | 321 | 267 | 325 |
| | $E_L/E_H$ | - | 0.85 | 0.79 | 0.84 | 0.75 | 0.84 | 0.75 | 0.72 | 0.73 | 0.70 | 0.71 |
| | Tensile modulus (MD/TD) | MPa | 591/633 | 970/1021 | 567/598 | 1440/1512 | 681/725 | 670/706 | 703/739 | 681/723 | 1717/1820 | 630/666 |
| | Tearing strength (MD/TD) | N/mm | 45/42 | 42/39 | 44/42 | 37/35 | 47/45 | 33/32 | 20/19 | 22/20 | 26/23 | 29/28 |
| | Impact strength | kN·m/mm | 40 | 34 | 40 | 30 | 42 | 32 | 24 | 26 | 29 | 29 |
| | Haze | % | 38 | 39 | 38 | 38 | 59 | 14 | 40 | 10 | 35 | 40 |
| | Wind off property | - | A | A | C | A | A | A | A | C | C | C |

[Table 3]

EP 2 583 994 A1

| | | | | Example 19 | Example 20 | Example 21 | Example 22 | Example 23 | Example 24 | Example 25 | Example 26 | Example 27 | Example 28 | Example 29 | Example 30 |
|---|---|---|---|---|---|---|---|---|---|---|---|---|---|---|---|
| Composition | Resin (A) | | Type | A1+A3 | A1+A3 | A1+A3 | A1+A3 | A1+A3+A4 | A5+A3 | A1+A3 | A1+A3 | A5+A3 | A1+A3+A4 | A5+A3 | A1+A3+A4 |
| | | | (wt%) | 20+35 | 20+35 | 20+35 | 20+35 | 20+35+3 | 20+35 | 20+35 | 13+22 | 20+35 | 20+35+3 | 20+35 | 20+35+3 |
| | Resin (B) | | Type | B4 | B5 | B4 | B5 | B1 | B1 | B6 | B4 | B4 | B4 | B6 | B6 |
| | | | (wt%) | 25 | 25 | 25 | 25 | 25 | 25 | 25 | 45 | 25 | 25 | 25 | 25 |
| | Plasticizer (C) | | Type | C1 | C1 | C1 | C1 | C1 | C1 | C1 | C1 | C1 | C1 | C1 | C1 |
| | | | (wt%) | 16 | 16 | 16 | 16 | 16 | 16 | 16 | 16 | 16 | 16 | 16 | 16 |
| | Organic lubricant | | Type | Lubricant 1 | Lubricant 1 | Lubricant 1 | Lubricant 1 | Lubricant 1 | Lubricant 1 | Lubricant 1 | Lubricant 1 | Lubricant 1 | Lubricant 1 | Lubricant 1 | Lubricant 1 |
| | | | (wt%) | 1 | 1 | 1 | 1 | 1 | 1 | 1 | 1 | 1 | 1 | 1 | 1 |
| | Crystal nucleating agent | | Type | Nucleating agent 1 | Nucleating agent 1 | Nucleating agent 2 | Nucleating agent 2 | — | Nucleating agent 1 | Nucleating agent 1 | Nucleating agent 1 | Nucleating agent 1 | — | Nucleating agent 1 | — |
| | | | (wt%) | 3 | 3 | 3 | 3 | — | 3 | 3 | 3 | 3 | — | 3 | — |
| | Melt viscosity | $\eta_A$ | Pa·s | 650 | 650 | 650 | 650 | 600 | 650 | 600 | 450 | 650 | 600 | 650 | 600 |
| | | $\eta_B$ | Pa·s | 650 | 900 | 650 | 900 | 1200 | 1200 | 750 | 650 | 650 | 650 | 750 | 750 |
| | | $\eta_A/\eta_B$ | - | 1 | 0.72 | 1 | 0.72 | 0.5 | 0.54 | 0.8 | 0.69 | 1 | 0.92 | 0.87 | 0.8 |
| Film properties | Crystallization peak | Peak temperature | °C | 133 | 133 | 132 | 132 | 136 | 138 | 133 | 130 | 138 | 136 | 138 | 136 |
| | | $\Delta Hmc_A$ | J/g | 2.0 | 2.0 | 1.9 | 1.9 | 3.1 | 3.3 | 2.0 | 1.3 | 3.3 | 3.1 | 3.3 | 3.1 |
| | Elongation | 5°C (MD/TD) | % | 333/304 | 301/279 | 349/318 | 309/285 | 315/290 | 340/327 | 330/305 | 344/318 | 346/319 | 340/311 | 350/326 | 341/314 |
| | | $E_L$ | % | 319 | 290 | 334 | 297 | 303 | 334 | 318 | 331 | 333 | 326 | 338 | 328 |
| | | 23°C (MD/TD) | % | 390/362 | 375/340 | 380/361 | 378/342 | 381/349 | 394/377 | 388/350 | 395/370 | 399/372 | 395/366 | 405/371 | 394/364 |
| | | $E_H$ | % | 376 | 358 | 371 | 360 | 365 | 386 | 369 | 383 | 386 | 381 | 388 | 379 |
| | | $E_L/E_H$ | - | 0.85 | 0.81 | 0.90 | 0.83 | 0.83 | 0.86 | 0.86 | 0.86 | 0.86 | 0.86 | 0.87 | 0.87 |
| | Tensile modulus (MD/TD) | | MPa | 665/710 | 903/965 | 660/703 | 897/960 | 681/710 | 695/730 | 698/740 | 600/624 | 700/735 | 666/715 | 703/761 | 695/735 |
| | Tearing strength (MD/TD) | | N/mm | 54/53 | 50/47 | 55/54 | 52/48 | 43/41 | 46/45 | 50/48 | 55/54 | 56/55 | 55/54 | 52/49 | 51/48 |
| | Impact strength | | kN·m/mm | 53 | 46 | 53 | 46 | 41 | 43 | 48 | 53 | 55 | 54 | 50 | 49 |
| | Haze | | % | 32 | 33 | No measure | No measure | 30 | 40 | 34 | 32 | 35 | 30 | 37 | 32 |
| | Wind off property | | - | A | A | A | A | A | A | A | A | A | A | A | A |

EP 2 583 994 A1

INDUSTRIAL APPLICABILITY

The polylactic acid-based film according to the present invention has excellent flexibility, tear resistance and impact resistance as well as excellent anti-blocking property and anti-bleeding property and exhibits good effects particularly when it is prepared by an inflation method. The polylactic acid-based film can be preferably used in the agricultural/forestry applications such as agricultural mulching films and fumigation films as well as a variety of packaging applications such as trash bags, compost bags, grocery bags for fruits, vegetables and the like and bags for various industrial products.

**Claims**

1.  A polylactic acid-based film composed of a composition comprising a resin (A), a resin (B) and a plasticizer (C), wherein said resin (A) is a polylactic acid-based resin and said resin (B) is an aliphatic polyester-based resin that are not polylactic acid-based resins and/or an aliphatic-aromatic polyester-based resin, wherein said polylactic acid-based film exhibits at least one crystallization peak in the temperature range of 105°C to 160°C when cooled from a molten state at a rate of 20°C/min by a differential scanning calorimeter and satisfies the following condition when the total calorific value of said crystallization peak(s) in said temperature range of 105°C to 160°C is defined as $\Delta Hmc_A$:

$$0.5 \leq \Delta Hmc_A \leq 9.5$$

2.  The polylactic acid-based film according to claim 1, wherein said plasticizer (C) is a block copolymer having a polyether-based segment and a polylactic acid-based segment and/or a block copolymer having a polyester-based segment and a polylactic acid-based segment.

3.  The polylactic acid-based film according to claim 1 or 2, wherein said resin (B) is at least one selected from the group consisting of polybutylene succinates, polybutylene succinate-adipates and polybutylene adipate-terephthalates.

4.  The polylactic acid-based film according to any one of claims 1 to 3, wherein said resin (B) has a melt viscosity of 400 to 1,000 Pa·s at a temperature of 200°C and a shear rate of 100 sec$^{-1}$.

5.  The polylactic acid-based film according to any one of claims 1 to 4, wherein said resin (B) is a polybutylene adipate-terephthalate which has a melt viscosity of 600 to 700 Pa·s at a temperature of 200°C and a shear rate of 100 sec$^{-1}$.

6.  The polylactic acid-based film according to any one of claims 1 to 5, wherein the average elongation ($E_L$) (%) in the longitudinal direction and the transverse direction (the direction perpendicular to the longitudinal direction) at 5°C and the average elongation ($E_H$) (%) in the longitudinal direction and the transverse direction at 23°C satisfy the following condition:

$$E_L/E_H \geq 0.70$$

7.  The polylactic acid-based film according to any one of claims 1 to 6, which comprises at least one selected from the group consisting of melamine-based compounds, metal phenylphosphonates, benzenecarboamide derivatives, talcs, clays, micas and carbon blacks in an amount of 0.1 to 20% by mass with respect to a total of 100% by mass of said composition.

8.  The polylactic acid-based film according to any one of claims 1 to 7, wherein said resin (A) is a mixture of a crystalline polylactic acid-based resin and an amorphous polylactic acid-based resin.

9.  The polylactic acid-based film according to any one of claims 1 to 8, wherein the tensile elastic moduli in the longitudinal and transverse directions are each 100 to 1,500 MPa.

22

## INTERNATIONAL SEARCH REPORT

| | International application No. |
|---|---|
| | PCT/JP2011/061286 |

**A. CLASSIFICATION OF SUBJECT MATTER**

*C08J5/18*(2006.01)i, *C08L67/04*(2006.01)i, *C08L101/16*(2006.01)n

According to International Patent Classification (IPC) or to both national classification and IPC

**B. FIELDS SEARCHED**

Minimum documentation searched (classification system followed by classification symbols)

C08J5/00-5/24, C08L1/00-101/16

Documentation searched other than minimum documentation to the extent that such documents are included in the fields searched

| Jitsuyo Shinan Koho | 1922-1996 | Jitsuyo Shinan Toroku Koho | 1996-2011 |
|---|---|---|---|
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-146170 A (Unitika Ltd.), 22 May 2002 (22.05.2002), claims; paragraphs [0016] to [0034] (Family: none) | 1-9 |
| Y | JP 2009-138085 A (Toray Industries, Inc.), 25 June 2009 (25.06.2009), claims; paragraphs [0009], [0014] to [0030], [0039] to [0040], [0044] to [0048], [0076] to [0083] (Family: none) | 1-9 |
| Y A | JP 2005-8869 A (Toray Industries, Inc.), 13 January 2005 (13.01.2005), claims; paragraphs [0022] to [0024] (Family: none) | 4,5 1-3,6-9 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 13 July, 2011 (13.07.11) | 26 July, 2011 (26.07.11) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2011/061286

C (Continuation).  DOCUMENTS CONSIDERED TO BE RELEVANT

| Category* | Citation of document, with indication, where appropriate, of the relevant passages | Relevant to claim No. |
|---|---|---|
| A | WO 2008/102919 A1  (Teijin Ltd.), 28 August 2008 (28.08.2008), page 4, line 23 to page 8, line 8; page 34, line 20 to page 36, line 27; page 53, line 2 to page 54, line 24; examples 17 to 18 & EP 2116576 A1 paragraphs [0018] to [0034], [0136] to [0145], [0207] to [0215]; examples 17, 18 & US 2010/0093888 A     & CN 101622310 A & KR 10-2009-0118938 A | 1-9 |

Form PCT/ISA/210 (continuation of second sheet) (July 2009)

| **INTERNATIONAL SEARCH REPORT** | International application No. |
| --- | --- |
| | PCT/JP2011/061286 |

<Limitation on the scope of the search>

The inventions in claims 1 to 9 of the present application relate to a polylactic acid-based film "comprising a composition containing resin (A), resin (B) and plasticizer (C), wherein resin (A) is a polylactic acid-based resin and resin (B) is an aliphatic polyester-based resin other than a polylactic acid-based resin and/or an aliphatic aromatic polyester-based resin, and, when cooled from a melted state at a cooling speed of 20°C/min using a differential scanning calorimeter, the polylactic acid-based film having at least one crystallization peak within a temperature range of 105-160°C and satisfying the requirement $0.5 \leq \Delta H_{mcA} \leq 9.5$ [wherein $\Delta H_{mcA}$ stands for the total calorific value of crystallization peak(s) within a temperature range of 105-160°C]".

However, the description exclusively discloses, in the meaning within PCT Article 5, the following polylactic acid-based films described in paragraph [0067], etc.

Polylactic acid-based films obtained by:

(I) mixing resin (A) (a polylactic acid-based resin), resin (B) (an aliphatic polyester-based resin other than a polylactic acid-based resin and/or an aliphatic aromatic polyester-based resin), and plasticizer (C) at preferred composition ratios as defined respectively in paragraphs [0032], [0036] and [0051];

(II) resin (A) (a polylactic acid-based resin) being a mixture of a crystalline polylactic acid-based resin, wherein the content ratio of L-lactic acid units in poly-L-lactic acid or the content ratio of D-lactic acid units in poly-D-lactic acid is adjusted to the aforesaid preferred range, with an amorphous polylactic acid-based resin, and the mixing ratio thereof being a preferred ratio as defined in paragraphs [0058]-[0059]; and

(III) adding a crystal nucleating agent, which is disclosed in paragraph [0105], in an amount as defined in paragraph [0075], or blending a polylactic acid resin as disclosed in paragraph [0028].

Thus, the aforesaid inventions are not supported in the meaning within PCT Article 6.

Concerning "satisfying the requirement $E_L/E_H \geq 0.7$ [wherein $E_L$ stands for the average elongation at 5°C in the length direction and width direction (the direction perpendicular to the length direction); and $E_H$ stands for the average elongation at 23°C in the length direction and width direction" appearing in claim 6, similarly, polylactic acid-based films satisfying the above requirements (I) and (III), that are disclosed in paragraphs [0077]-[0079] in the description, are exclusively disclosed in the meaning within PCT Article 5 and, therefore, the invention is not supported in the meaning within PCT Article 6.

Concerning tensile elasticity appearing in claim 9, similarly, polylactic acid-based films satisfying the above requirement (I), that are disclosed in paragraph [0080] in the description, are exclusively disclosed in the meaning within PCT Article 5 and, therefore, the invention is not supported in the meaning within PCT Article 6.

Such being the case, the search was made on the scope that is supported by the description and disclosed therein, namely, polylactic acid-based films satisfying all of the aforesaid requirements (I) to (III).

Form PCT/ISA/210 (extra sheet) (July 2009)

**EP 2 583 994 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002146170 A
- JP 2006063308 A
- JP 2009138085 A

**Non-patent literature cited in the description**

- **P. SMALL.** *J. Appl. Chem.,* 1953, vol. 3, 71